# EUROPEAN PATENT SPECIFICATION

(11) **EP 2 520 340 B1**
(45) Date of publication and mention of the grant of the patent: **04.07.2018**
(21) Application number: 11164864.8
(22) Date of filing: 04.05.2011
(51) Int. Cl.: A62C 37/36, A62C 37/48, F42C 11/02, H01L 41/113, A62C 35/08, A62C 35/02

(54) **Manual release for a pyrotechnical actuator fired by a piezoelectric generator or igniter**
Manuelle Freigabe für einen von einem piezoelektrischen Generator oder Zünder angefeuerten pyrotechnischen Aktuator
Libération manuelle pour actionneur pyrotechnique déclenché par un générateur piézoélectrique ou dispositif d'ignition

(43) Date of publication of application: 07.11.2012
(73) Proprietor: Kidde Technologies, Inc., Wilson, NC 27896 (US)
(72) Inventor: Smith, Paul D., West Sussex BH42 4QS (GB); Rennie, Paul, Berkshire RG12 0TS (GB); Dunster, Robert G., Berkshire SL1 6ER (GB); Dutson, Beth A., Hampshire RG27 9SU (GB); Weller, Paul W., Berkshire SL1 5EG (GB)
(74) Representative: Dehns

(56) References cited:
- DE-A1-102006 008 384
- GB-A- 1 545 776

## Description

### BACKGROUND

This invention relates to fire detection and suppression, and more particularly to pyrotechnically actuated fire extinguishers which may be installed within vehicles.

There are a wide variety of fire detection and extinguishing technologies and fire extinguisher constructions. These include propellant-actuated extinguishers and extinguishers charged with compressed and/or liquified gas.

Early propellant-actuated extinguisher designs disclose a fire extinguisher wherein a liquid extinguishing medium, such as bromotrifluoromethane, is expelled from its container by gas evolved from the burning of a pyrotechnic charge. The charge is originally stored in a container which includes electric squibs. The charge container is mounted in an upper end of the vessel within a container cup. Opposite the container cup, an outlet from the vessel is formed by an elbow fitting sealed by a rupturable diaphragm. Ignition of the pyrotechnic charge ruptures a wall of the charge container and vents combustion gases into the vessel. The combustion gases serve as a gas piston acting on the surface of the liquid rupturing the diaphragm which sealed the outlet and propelling the liquid out of the extinguisher.

An exemplary propellant-actuated extinguisher where the extinguishing medium is expelled from its container by gas generated from a pyrotechnic charge is disclosed in DE 10 2006 008 384.

The application of a propellant-actuated extinguisher to use in modern vehicles discloses an extinguisher in many ways similar, but the exemplary fire suppressant utilized is Halon 1301 or various hydroflurocarbon agents such as HFC227ea or FE36. The lower end of the extinguisher vessel is sealed by a rupturable diaphragm. A gas generating device is mounted atop the neck of the vessel. The exemplary gas generating composition is 62% sodium oxide and 38% copper oxide. In either exemplary example, the propellant-actuated extinguisher again contains a pyrotechnic charge to create a gaseous pressure in a bottle. The pyrotechnic charge is wired to the vehicle fire and overheat detection system, which will send an electric current to activate the charge upon detection of an overheat or fire condition.

In extinguishers charged with compressed or liquefied gas, a valve is opened to actuate the extinguisher. In these extinguishers, a pyrotechnical actuator is supplied with an electric current that ignites an internal pyrotechnical charge. The pressure energy produced by the pyrotechnic charge is turned into mechanical energy, such as by moving a firing pin. In one example, the firing pin pushes against a lever that turns a spindle. The spindle releases a beam that allows a plug to open in the valve, which allows for the compressed contents of the extinguisher to be released. Another known fire extinguishing apparatus is described in GB 1 545 776 A, on which is based the two-part form of the claims. In many integrated detection and suppression systems electrical power is supplied from a detection system to a pyrotechnical actuator to initiate fire suppression. This leaves the system vulnerable to failure of the power supply, detection system or the interconnecting cables between the detection system and the fire suppression actuation mechanism. While a fully powered detection system may offer the best performance it is clearly unacceptable for the extinguishing system to fail during a fire event.

### SUMMARY

The present invention provides a fire extinguishing apparatus comprising: an actuating mechanism defining a first chamber containing an electrically operable explosive device; a piezoelectric element capable of producing an electrical output in response to a mechanical force upon the piezoelectric element electrically connected to the electrically operable explosive device; a pressure container with material housed therein; and a manually actuatable mechanical mechanism adjacent the piezoelectric element for producing the mechanical force on the piezoelectric element; wherein a mechanical force produced by the mechanical mechanism is applied to the piezoelectric element to produce the electrical output that actuates the electrically operable explosive device; characterised in that the fire extinguishing apparatus further comprises a thermal sensing mechanism connected to the mechanical mechanism; and in that the thermal sensing mechanism is configured to actuate a portion of the mechanical mechanism at an activation temperature to provide the mechanical force on the piezoelectric element; and in that the pressure container has a valve configured to be actuated by the actuating mechanism.

### BRIEF DESCRIPTION OF THE DRAWINGS

The present invention will be further explained with reference to the drawing figures listed below, wherein like structures are referred to by like numerals throughout the several views.
Fig. 1 is a combined schematic and elevation view showing an integrated detection and suppression system.
Fig. 2 is an elevation view of a suppression system.
Fig. 3 is a cross-section of a manual mechanism for a suppression system.
Fig. 4 is a cross-section of another embodiment of a manual mechanism for a suppression system.
Fig. 5 is a cross-section schematic of still another embodiment of a manual mechanism for a suppression system.
Fig. 6A and 6B are schematics of integrated mechanical and thermal detection actuation for suppression systems.
Fig. 7 is a cross section of a combination mechanical and thermal detection actuation for a suppression system.
Fig. 8 is a cross section of another embodiment of a combination mechanical and thermal detection actuation for a suppression system.
Fig. 9 is a cross section of a still another embodiment of a combination mechanical and thermal detection actuation for a suppression system.

While the above-identified drawing figures set forth individual embodiments of the invention, other embodiments are also contemplated, as noted in the discussion. In all cases, this disclosure presents the invention by way of representation and not limitation. It should be understood that numerous other modifications and embodiments can be devised by those skilled in the art which fall within the scope of the appended claims.

### DETAILED DESCRIPTION

A manually actuated mechanism can be employed to generate a mechanical force on a piezoelectric generator. The generated mechanical force can then be applied to a piezoelectric element to produce an electrical pulse to fire a pyrotechnical actuator. The piezoelectric element could be either a piezoelectric generator which applies power to fire an existing pyrotechnical actuator or a piezoelectric element to directly ignite a pyrotechnical composition within a pyrotechnical actuator. The aim of the device is to provide an actuation element that is suitable for use with either an electrically operated detection system or an unpowered mechanically operated detection system. Such a device would be compatible with existing system designs allowing the use of the same pyrotechnical actuator for both powered and unpowered modes of operation.

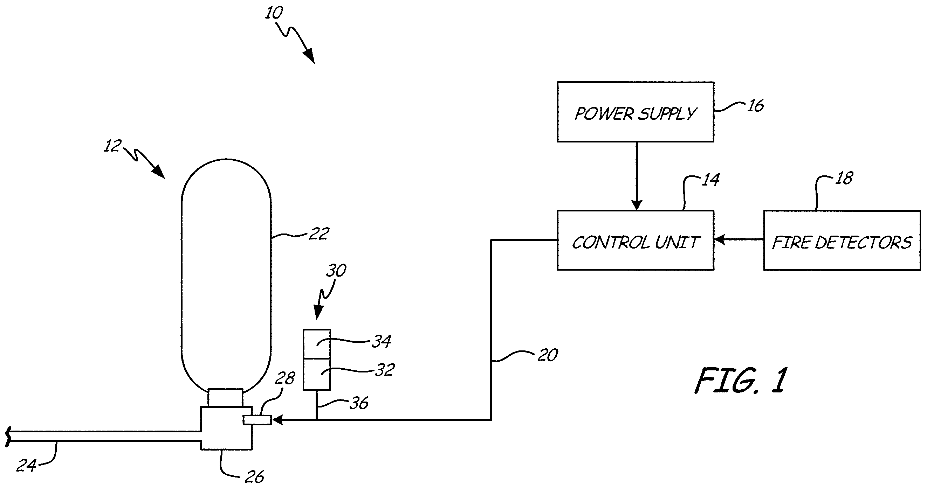

The manually actuated mechanism is illustrated in the exemplary embodiments in Figs. 1-9. Referring to Fig. 1, a fire detection and suppression system 10 is shown. The system includes fire extinguisher 12, control unit 14, power supply 16, primary fire detector 18, and wiring leads 20. Primary fire detector 18 may include one or more smoke detectors, overheat detectors, optical flame detectors or similar devices known within the art. Similarly, wiring leads 20 are electrical wires or cables also known in the art. Control unit 14 will receive signals from primary fire detector 18 and send a signal to provide current to activate actuating mechanism 28. The current comes from power supply 16, which may be a generator, battery, or similar power source known within the art.

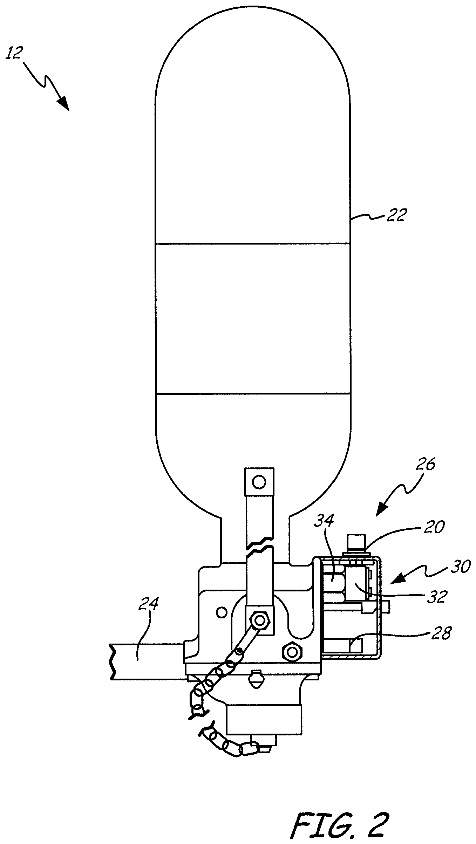

As illustrated in Figs. 1 and 2, extinguisher 12 includes container 22, distribution system 24, valve assembly 26, actuating mechanism 28, and manually activated force mechanism 30. In the embodiment of Fig. 1, manually activated force mechanism 30 is located remotely from container 22, distribution system 24, valve assembly 26, and actuating mechanism 28. In the embodiment of Fig. 2, manually activated force mechanism 30 is adjacent valve assembly 26, and in one embodiment may be in direct contact with valve assembly 26, actuating mechanism 28, and/or container 22.

Container 22 is a pressure vessel, often referred to as a bottle. Container 22 is constructed from a metal alloy or similar high strength rigid material that can withstand high pressure. Container 22 houses a fire extinguishing material, such as a fire retardant or fire suppressant, which may be either a fluid or particulate matter. A source of gas pressurizes the fire extinguishing material at least when the bottle is in a discharging condition and the fire extinguishing material is discharged through an outlet when fire extinguisher 12 is in the discharging condition. Valve assembly 26 connects container 22 with distribution system 24. Distribution system 24 as illustrated is a pipe or tube that will lead to one or more nozzles for spreading the fire extinguishing material over a selected area to be protected, although other systems are known to those of skill in the art.

Valve assembly 26 is connected to actuating mechanism 28. In one embodiment, fire extinguisher 12 is charged with compressed or liquefied gas, and valve assembly 26 is opened to actuate the extinguisher. In these extinguishers, a pyrotechnical actuator is supplied with an electric current that ignites an internal pyrotechnical charge. The pressure energy produced by the pyrotechnic charge is turned into mechanical energy, such as by linearly moving a firing pin. The firing pin pushes against a lever that turns a spindle. The spindle releases a beam that allows a plug to open in the valve, which allows for the compressed contents of the extinguisher to be released.

In another embodiment, valve assembly 26 has a valve element having a closed position sealing an outlet to the distribution system 24, and an open position permitting discharge of the suppressant through the outlet. In one embodiment, valve assembly contains a valve element that is shiftable from the closed position to the open position responsive to a pressure within the bottle exceeding a discharge threshold pressure, whereupon fire extinguisher 12 enters the discharging condition and discharges the fire extinguishing material through the outlet.

In various implementations, the valve element of valve assembly 26 may comprise a poppet having a head and a stem connected to the head. The head may have a fore surface facing the interior of container 22 and an opposite aft face from which the stem extends along a poppet axis. Valve assembly 26 may have a locking element which in the pre-discharge condition has a first portion engaged to the poppet and a second portion held relative to container 22. In the pre-discharge condition the locking element transmits force to the poppet which retains the poppet in the closed position and, responsive to the pressure within container 22 exceeding the discharge threshold pressure the locking element ruptures, whereupon the pressure within container 22 drives the poppet to the open position and fire extinguisher 12 enters the discharging condition. A valve return spring may bias the poppet toward the closed position. The return spring is effective to return the poppet from the open position to the closed position when the fire extinguishing material has been substantially discharged from fire extinguisher 12. In another embodiment, the pyrotechnical actuator applies force to release a locking element at which point the pressure within container 22 drives the poppet to the open position and fire extinguisher 12 enters the discharging condition.

The valve element may comprise a head having a fore face facing the interior of container 22 and an opposite aft face and a collapsible shaft between the head and a valve body. In the pre-discharge condition, when the pressure within container 22 is lower than the discharge pressure, axial compression of the shaft may be effective to resist rearward movement of the head and retain the head in the closed position. Responsive to the pressure within the bottle exceeding the discharge threshold pressure the shaft may collapse via buckling, whereupon the pressure within container 22 drives the head to the open position and fire extinguisher 12 enters the discharging condition. The source of gas to create pressure within container 22 may comprise a chemical propellant charge. The chemical propellant charge may have a combustion temperature of less than about 825° C. The chemical propellant charge may have gaseous combustion products consisting essentially of nitrogen, carbon dioxide, water vapor and mixtures thereof. The chemical propellant charge may consist essentially of a mixture of 5-aminotetrazole, strontium nitrate, and magnesium carbonate.

The source of gas may comprise a replaceable cartridge containing a chemical propellant charge. A cartridge holder assembly known within the art may hold the cartridge and may have a first end mounted within an aperture at an upper end of container 22 and a second end immersed within the suppressant when fire extinguisher 12 is in the pre-discharge condition. A closure may close the first end, and a replaceable squib may be mounted within the closure. The discharge threshold pressure may be between about 2 MPa and about 10 MPa. The fire extinguishing material may be selected from the group consisting of PFC's, HFC's, water, and aqueous solutions. In this embodiment, actuating mechanism 28 includes a pin that is driven by a pyrotechnic charge. The pin will pierce the cartridge with the propellant to start the discharge of fire extinguishing material from container 22.

In one embodiment, fire extinguishing material is contained by container 22 when fire extinguisher 12 is in a pre-discharge condition. A replaceable cartridge contains a chemical propellant charge that is activated by actuating mechanism 28. Actuating mechanism 28 is a pyrotechnic charge for a gas generator in the cartridge. When activated, the gas generator releases a poppet that is spring biased toward a first position in which it blocks a path between the cartridge and the suppressant. Upon combustion of the propellant in the gas generator, the poppet shifts under pressure applied by combustion gasses to a second position wherein such path is unblocked and the combustion gases may communicate with and pressurize fire extinguishing material in container 22.

Aside from being connected to power supply 16 via wiring leads 20, actuation mechanism 28 is also connected to manually activated force mechanism 30. Manually activated force mechanism 30 includes a mechanical apparatus 34, piezoelectric generator 32, and wiring leads 36. Again, wiring leads 36 are electrical wires or cables also known in the art. In an alternative embodiment, the system may not necessarily require control unit 14, separate power supply 16, and wiring 20 if the detection mechanism is a secondary mechanical detection system described further herein, and not primary fire detector 18.

Piezoelectric generator 32 is a piezoelectric device known within the art. For example, typical piezoelectric stack generators are manufactured by Piezo systems Inc. A technical concern with the use of piezoelectric generators is the susceptibility of piezoelectric devices to fail at temperatures close to the Curie temperature of the piezoelectric material. PZT (lead zirconate titanate) has a typical Curie temperature of 350°C and should be able to function up to a temperature of at least 250°C. Higher temperature materials are also available, such as modified bismuth titanate, which is able to withstand temperatures in excess of 700°C.

As previously stated, actuating mechanism 28 may be a pyrotechnic actuator. Typical pyrotechnical actuators used in fire suppression systems, for example Metron™ actuators, require a firing pulse between 6-16mJ. The Metron™ actuators contain a charge that is lit to create a small explosion that forces out a firing pin. The firing pin actuates a lever, gear, or similar mechanical element that is used to operably move a valve from a closed position to an open position. Commercially available piezoelectric generators, built up from stacks of thin piezoelectric layers, can be designed to produce a high current, low voltage output and are capable of delivering 10-20mJ for an applied force of 1-2kN. These devices are therefore more than capable of supplying sufficient energy to directly fire a Metron™.

Typically piezoelectric stack generators are of the order of 20x5x5mm and are compatible with application of a force from either a manually activated force mechanism or a simple temperature sensitive spring loaded or fluid pressure driven detection mechanism. In order to generate a pulse of sufficient magnitude it will be necessary to apply the force from either a manually activated force mechanism, temperature sensitive detection element, or other component that creates a mechanical force over a short period of time in the form of a short sharp impact.

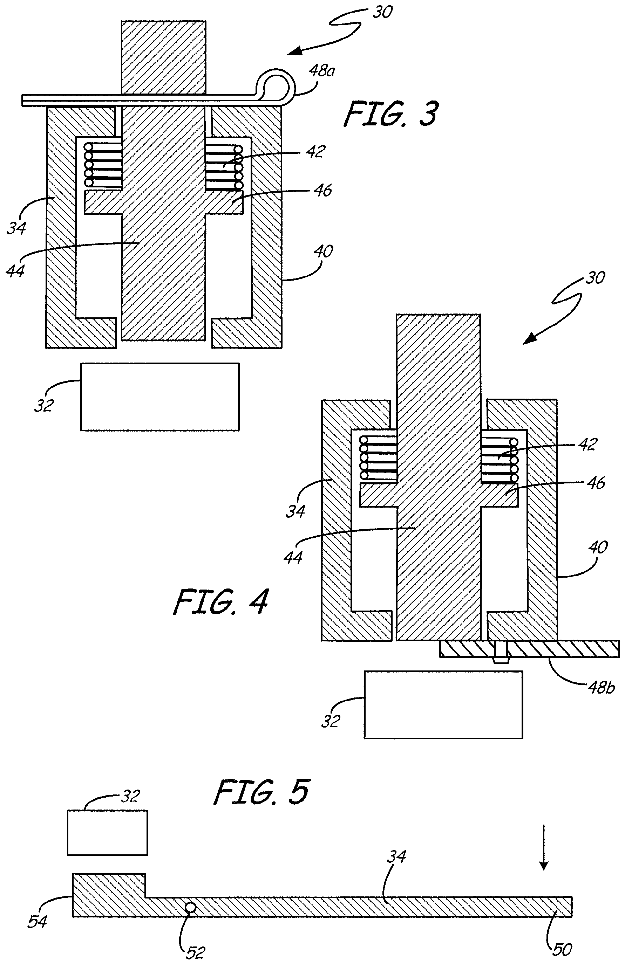

Several embodiments of manual activated force mechanism 30 including mechanical apparatus 34 and piezoelectric generators 32 are illustrated in Figs. 3-5. The mechanical apparatus 34 in all embodiments contain manual actuation devices.

Figs. 3 and 4 illustrate two examples of a spring loaded mechanism in which an actuation piston is held in place against the action of a compression spring by a manually operable locking mechanism. In Figs. 3 and 4, manual activated force mechanism 30 is a mechanical mechanism that includes housing 40, spring 42, piston 44 with flange 46, and pin 48. Housing 40 is constructed from a metal alloy or similarly rigid and fire resistant material, and contains spring 42 and piston 44, which extends through a central opening in housing 40. Spring 42 is illustrated as a metal coil spring in compression between housing 40 and flange 46 of piston 44. In other embodiments, spring is any elastic or resilient structure capable of providing a force on the end of actuation pin 48. Piston 44 is a round metal pin with flange 46 extending from a central portion. In other embodiments, piston 44 is of any geometry that allows for movement through the openings in housing 40, and constructed from any rigid, fire resistant material. Pin 48 is any pin known to those of skill in the art. In Fig. 3, pin 48a is illustrated as a cotter pin (split pin) although other forms of pin such as a roll pin may be used. Alternatively, as shown in Fig. 4, a lever 48b may be used that swivels to an open position that allows piston 44 to travel through housing 40 to strike piezoelectric generator 32.

As piston 44 is drawn away from piezoelectric generators 32, flange 46 puts spring 42 into compression. Piston 44 is held in place by pin 48a atop housing 40 (Fig. 3) or lever 48b below housing 40 (Fig. 4). Upon manual removal of pin 48, spring 42 will exert a force upon flange 46 to move piston 44 downwards to contact piezoelectric generators 32. The mechanical force on piezoelectric generators 32 will create a current that is sent via wiring leads 36 to actuation mechanism 28 to spark the pyrotechnic charge therein, thus discharging the fire extinguishing material from fire extinguisher 12 either through the opening of a valve, or through the creation of pressure from the pyrotechnic charge acting as a gas generator as previously described.

Both the retaining pin 48 and lever embodiment may be operated remotely via a cable attachment. The embodiments shown may be operated remotely via a cable or lever/rod attachment with the piezoelectric generator in close proximity to the pyrotechnic charge. Alternatively, piezoelectric generator 32 may be in close proximity to the operator and distant from the suppressor. In this case, the current output from piezoelectric generator 32 is carried by electrical cables or wiring leads 36 to the pyrotechnic charge.

Fig. 5 illustrates a second embodiment of a mechanical mechanism for mechanical apparatus 30 with a lever mechanism, which includes lever 50, pivot point 52, and striker head 54. Again, all parts are constructed from rigid fire resistant materials, such as metal alloys. In this embodiment, striker head 54 is used to apply mechanical force to the piezoelectric generator 32. As a downward force is applied to the end of lever 50, the bar swivels around pivot point 52, and striker head 54 is raised to contact piezoelectric generators 32. In this design, a long lever 50 may be used so as to decrease the amount of force required to operate the system to assure enough mechanical force is generated when striker head 54 contacts piezoelectric generators 32.

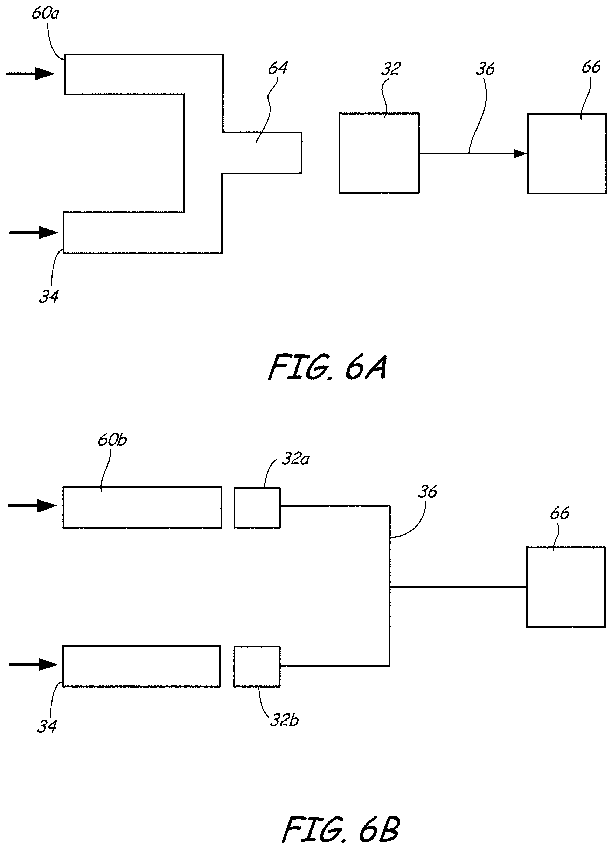

Manual actuated force mechanisms 30 could be coupled to any piezoelectric element employed for a temperature activated release mechanism. For example, the mechanical apparatus 34 described herein may be combined with other actuators to provide a combination electrical, manual, and mechanical system as illustrated in Figs. 6A and 6B. In Fig. 6A, mechanical apparatus 34 and a thermally actuated apparatus 60a both are attached to a common actuator 64 through a mechanical force coupler. Actuator 64 will provide a mechanical force on piezoelectric generator 32, which in turn provides a current that is sent via wiring leads 36 to actuation mechanism 28 to spark pyrotechnic charge 66. In an alternative embodiment illustrated in Fig. 6B, mechanical apparatus 34 will provide a mechanical force on piezoelectric generator 32b, while thermally actuated apparatus 60b will provide a mechanical force on piezoelectric generator 32a. Both piezoelectric generators 32a and 32b contain wiring leads 36 that will provide a current to pyrotechnic charge 66.

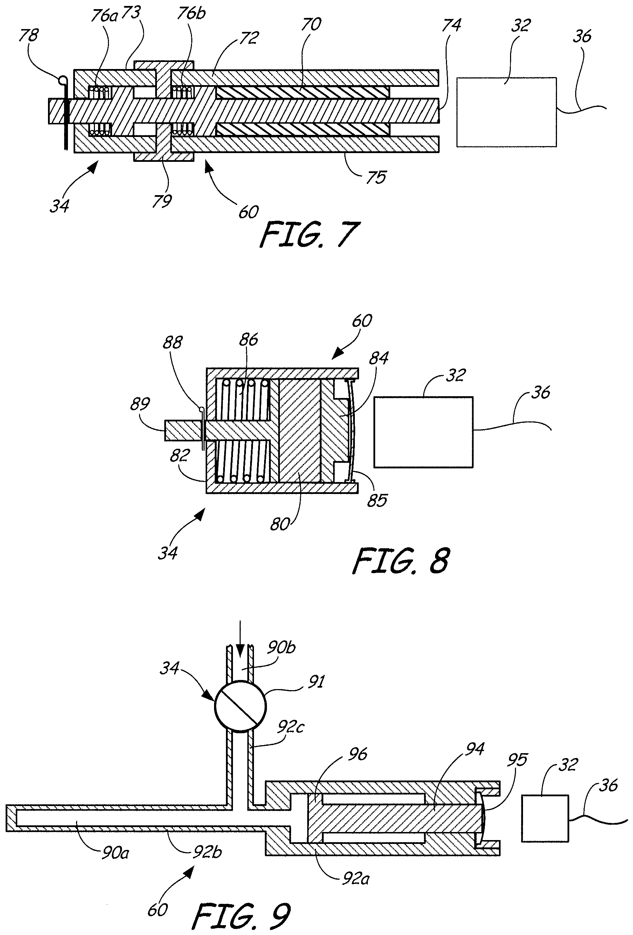

Fig. 7 is a cross section of a combination mechanical and thermal detection actuation apparatus for a suppression system. The apparatus has mechanical apparatus 34 including housing 73, pin 78, and spring 76a, and thermally actuated apparatus 60 including housing 72, sensing element 70, and spring 76b. Mechanical apparatus 34 is similar to those disclosed in Figs. 3-5, and may includes any of the embodiments thereof. Mechanical apparatus 34 and thermally actuated apparatus 60 are joined by mechanical coupling 79. Piston 74 extends through both mechanical apparatus 34 and thermally actuated apparatus 60, and contains two respective flanges that hold springs 76a and 76b in compression in the unactuated state.

Housings 72 and 73, and mechanical coupling 79 are constructed from a metal alloy or similarly rigid and fire resistant material. The material should also allow for heat transfer through the walls of housing 72. Piston 74 is formed from a similar material as housing 75, and has its center shaft surrounded by sensing element 70. Springs 76a and 76b are illustrated as a metal coil springs in compression between housings 72 and 73 and the flanges of piston 74. In other embodiments, the spring is any elastic or resilient structure capable of providing a force on the flanges of piston 74.

Sensing element 70 is a temperature dependent material, such as eutectic solder or solidified salt solution. In the solid state, the temperature dependent material holds actuation pin in place, creating a compressive force on spring 76b. Upon reaching a set threshold temperature, the solder or solidified eutectic salt solution will melt and become fluid. This will allow the stored compressive force on spring 76b to release and drive piston 74 towards piezoelectric generator 32. The force on the piezoelectric generator 32 will create a current that is sent via wiring leads 36 to actuation mechanism 28 (not shown in Fig. 7) to spark the pyrotechnic charge therein, thus discharging the fire extinguishing material from fire extinguisher 12 either through the opening of a valve, or through the creation of pressure from the pyrotechnic charge acting as a gas generator as previously described.

In one embodiment, the force of spring 76b is such that when sensing element 70 becomes liquid, it will cause pin 78 to shear allowing for movement of piston 74. In an alternative embodiment, mechanical coupling 79 is designed to allow the independent action of the portion of piston 74 within thermally actuated apparatus 60 from the portion in mechanical apparatus 34 when sensing element 70 is activated at its threshold temperature. In the temperature range below the activation temperature of sensing element 70, the entire piston 74 is coupled to allow manual activation of the mechanical apparatus 34. In a further alternative embodiment the force of spring 76a is such that when pin 78 is removed it will cause the failure of the mechanical hold between the piston 74 and the housing 72 provided by sensing element 70 allowing for movement of piston 74.

Fig. 8 is a cross section of another embodiment of the combination mechanical and thermally actuated apparatus for a suppression system. The apparatus has mechanical apparatus 34 including housing 82, piston 89, pin 88, and spring 86, and thermally actuated apparatus 60, sensing element 80, second piston 84, and diaphragm 85. In this embodiment, housing 82 acts as the mechanical coupling to join mechanical apparatus 34 and thermally actuated apparatus 60. Housing 82 is constructed from a metal alloy, and acts to contain sensing element 80 on the sides, while allowing for the linear motion of second piston 84 in the direction of piezoelectric generator 32. Mechanical apparatus 34 is similar to those disclosed in Figs. 3-5, and may include any of the embodiments thereof. To manually actuate the system to provide mechanical force to piezoelectric generator 32, pin 88 is removed. The removal of pin 88 releases spring 86, which pushes piston 89 within housing 82 towards piezoelectric generator 32. Spring 86 has enough stored mechanical energy to move sensing element 80 and push second piston 84 through diaphragm 85 to apply the necessary force to piezoelectric generator 32.

Sensing element 80 is an intumescent material. For thermally actuated apparatus 60, the force to drive second piston 89 is supplied by the intumescent material. The intumescent material pushes against the base of second piston 84, which is held in place against the action of the intumescent material by diaphragm 85. When the intumescent material is heated above a threshold temperature, second piston 84 ruptures diaphragm 85 and applies force to piezoelectric generator 32, which creates a current sent to actuation mechanism 28 via wiring leads 36. An example of a suitable intumescent material is a thermostatic wax.

Fig. 9 is a cross section of yet another embodiment of the combination mechanical and thermally actuated apparatus for a suppression system. The combination apparatus has mechanical apparatus 34 including valve 91, pressurized fluid 90b, and housing 92c, and thermally actuated apparatus 60 includes housings 92a and 92b, sensing element 90a, diaphragm 95, and piston 94. The unpowered linear heat detector of thermally actuated apparatus 60 generates force by the increase in pressure of a fluid contained within a thin sensing tube that is housing 92b. In the particular example shown, sensing element 90a is the fluid pressure and applies force to base piston 94 which is held in place against the action of the fluid pressure by diaphragm 95. When the pressure of the fluid exceeds a threshold value due to an increase in temperature, the head of piston 94 ruptures diaphragm 95 and is linearly propelled through housing 92a to apply force to the piezoelectric generator 32.

Mechanical apparatus 34 contains housing 92c that is in fluid communication with fluid of sensing element 90a in housing 92b. Valve 91 prevents sensing element 90a from escaping the housing 92b and 92c when thermally actuated. Valve 91 may be any type of valve known to those of skill in the art, including butterfly, piston, needle, gate, ball, or similar types of valves. A source of pressurized fluid is also in communication with housing 92c on the other side of valve 91. Upon manual opening of valve 91, the pressurized fluid will be forced into housing 92c and 92b, and apply force to base piston 94. This will in turn move piston 94 through diaphragm 95, resulting in force being applied to piezoelectric generator 32.

Thermally actuated apparatus 60 in some embodiments may have an activation temperature between 80°C and 250°C or higher, or any subset thereof, including an exemplary range of between 100°C and 125°C, and all components are designed as required by the specific application of the embodiment.

Piezoelectric stacks are relatively high cost elements (for example, around $100 in small volumes), and as such it would be preferable to use a lower cost (for example, <$5) single crystal such as those commonly used in piezoelectric igniters. The use of a piezoelectric stack to fire an existing pyrotechnical actuator utilises the spark generated by a piezoelectric igniter to initiate combustion of the pyrotechnical charge in actuation mechanism 28. In one embodiment, this requires the use of a pyrotechnical actuator capable of being fired by a single electrical spark.

The spark generated by a piezoelectric igniter is more suited to the ignition of a flammable gas rather than a solid pyrotechnical charge; however, in a compact actuator a solid charge is required to generate sufficient force to drive the actuator. In one embodiment, a piezoelectric igniter is used to ignite a flammable gas which in turns ignites a pyrotechnical charge. In another embodiment, the device in which the spark electrodes are housed in a free space is separated by a thin gauze from the pyrotechnical charge. The free space would be filled with a flammable gas which could be ignited by a piezoelectric igniter to fire the pyrotechnical charge.

The benefits of the disclosed embodiments for the fire detection and suppression system are that the system provides a means for incorporating a secondary emergency release mechanism in an electrically operated system which operates in the event of system failure without the need to alter the design of the existing fire extinguisher design. Further, a means for using an unpowered, self contained detection mechanism with existing electrically operated extinguishers is now provided. Thus, with the embodiments disclosed, the system allows for a single pyrotechnical actuation element for use with either an electrically operated detection system or an unpowered mechanically operated detection system enabling commonality of parts between different installations. With the disclosed embodiments, there is no need to worry about power failures, electrical detection errors from the control unit and detection devices, or wire failures during a fire incident as the mechanical temperature sensing apparatus 34 will act as a backup and redundant system.

Although the present invention has been described with reference to preferred embodiments, workers skilled in the art will recognize that changes may be made in form and detail without departing from the scope of the appended claims.

## Claims

1. A fire extinguishing apparatus (12) comprising:
an actuating mechanism (28) defining a first chamber containing an electrically operable explosive device (66);
a piezoelectric element (32) capable of producing an electrical output in response to a mechanical force upon the piezoelectric element electrically connected to the electrically operable explosive device;
a pressure container (22) with material housed therein; and
a manually actuatable mechanical mechanism (34) adjacent the piezoelectric element for producing the mechanical force on the piezoelectric element;
wherein a mechanical force produced by the mechanical mechanism is applied to the piezoelectric element to produce the electrical output that actuates the electrically operable explosive device;
**characterised in that** the fire extinguishing apparatus further comprises a thermal sensing mechanism (60) connected to the mechanical mechanism;
**in that** the thermal sensing mechanism is configured to actuate a portion of the mechanical mechanism at an activation temperature to provide the mechanical force on the piezoelectric element; and
**in that** the pressure container has a valve (26) configured to be actuated by the actuating mechanism.

2. The fire extinguishing apparatus of claim 1 wherein the mechanical mechanism comprises a spring (42;76a,76b;86) and a piston (44;74;84), the piston being manually releasable so as to be urged by the spring into contact with the piezoelectric element.

3. The fire extinguishing apparatus of claim 2 wherein the mechanical mechanism further comprises a pivot point and a lever (48b), the lever being arranged to retain the piston against the spring and being manually actuatable to swivel about the pivot point to release the spring.

4. The fire extinguishing apparatus of claim 2 wherein the mechanical mechanism further comprises a diaphragm (85) and an actuation pin (88) being configured such that removal of the pin causes the spring to push the piston through the diaphragm into contact with the piezoelectric element.

5. The fire extinguishing apparatus of claim 1 wherein the mechanical mechanism comprises: a housing (92b), a sensing fluid (90a), a diaphragm (95), and a piston (94) being configured such that force generated by increased temperature of the sensing fluid within the housing is applied to a base of the piston, which is held in place by the diaphragm, to cause the piston to rupture the diaphragm and contact the piezoelectric element.

6. The fire extinguishing apparatus of any preceding claim wherein the thermal sensing mechanism has an activation temperature between 80 degrees Celsius and 250 degrees Celsius.

7. The fire extinguishing apparatus of any preceding claim wherein the material in the pressure container is a fire suppressant or fire retardant.

8. A fire detection and suppression system (10) comprising:
at least one fire detection apparatus (18);
a control unit (14);
a power supply (16) connected to the control unit and at least one fire detection apparatus; and
the fire extinguishing apparatus as defined in any preceding claim connected to the control unit;
wherein the control unit is for receiving signals from the at least one fire detection apparatus and for sending a signal to provide current to activate the actuating mechanism.

## Patentansprüche

1. Feuerlöschvorrichtung (12), umfassend:
einen Betätigungsmechanismus (28), der eine erste Kammer definiert, die eine elektrisch betreibbare explosive Vorrichtung (66) enthält;
ein piezoelektrisches Element (32), das in der Lage ist, eine elektrische Ausgabe als Reaktion auf eine mechanische Kraft auf das piezoelektrische Element, das elektrisch mit der elektrisch betreibbaren explosive Vorrichtung verbunden ist, zu erzeugen;
ein Druckbehälter (22) mit darin aufgenommenem Material; und
einen manuell betätigbaren mechanischen Mechanismus (34) neben dem piezoelektrischen Element zum Erzeugen der mechanischen Kraft auf das piezoelektrische Element;
wobei eine mechanische Kraft, die durch den mechanischen Mechanismus erzeugt wird, auf das piezoelektrische Element aufgebracht wird, um die elektrische Ausgabe zu erzeugen, die die elektrisch betreibbare explosive Vorrichtung betätigt;
**dadurch gekennzeichnet, dass** die Feuerlöschvorrichtung ferner einen thermischen Erfassungsmechanismus (60) umfasst, der mit dem mechanischen Mechanismus verbunden ist;
dass der thermische Erfassungsmechanismus konfiguriert ist, um einen Teil des mechanischen Mechanismus bei einer Aktivierungstemperatur zu betätigen, um die mechanische Kraft auf das piezoelektrische Element auszuüben;
und dass der Druckbehälter ein Ventil (26) aufweist, das dazu eingerichtet ist, durch den Betätigungsmechanismus betätigt zu werden.

2. Feuerlöschvorrichtung nach Anspruch 1, wobei der mechanische Mechanismus eine Feder (42; 76a, 76b; 86) und einen Kolben (44; 74; 84) aufweist, wobei der Kolben manuell lösbar ist, um durch die Feder in Kontakt mit piezoelektrischen Element gedrückt zu werden.

3. Feuerlöschvorrichtung nach Anspruch 2, wobei der mechanische Mechanismus ferner einen Drehpunkt und einen Hebel (48b) umfasst, wobei der Hebel so angeordnet ist, dass er den Kolben gegen die Feder hält und manuell betätigbar ist, um um den Drehpunkt zu drehen, um die Feder zu lösen.

4. Feuerlöschvorrichtung nach Anspruch 2, wobei der mechanische Mechanismus ferner eine Membran (85) und einen Betätigungsstift (88) umfasst, die derart konfiguriert sind, dass das Entfernen des Stifts bewirkt, dass die Feder den Kolben durch die Membran in Kontakt mit dem piezoelektrischen Element drückt.

5. Feuerlöschvorrichtung nach Anspruch 1, wobei der mechanische Mechanismus umfasst: ein Gehäuse (92b), ein Erfassungsfluid (90a), eine Membran (95) und einen Kolben (94), die so konfiguriert sind, dass die durch die erhöhte Temperatur des Erfassungsfluids innerhalb des Gehäuses erzeugte Kraft auf eine Basis des Kolbens aufgebracht wird, die durch die Membran in Position gehalten wird, um zu bewirken, dass der Kolben die Membran aufreißt und das piezoelektrische Element berührt.

6. Feuerlöschvorrichtung nach einem der vorhergehenden Ansprüche, wobei der thermische Erfassungsmechanismus eine Aktivierungstemperatur zwischen 80 °C und 250 °C aufweist.

7. Feuerlöschvorrichtung nach einem der vorhergehenden Ansprüche, bei der das Material in dem Druckbehälter ein Feuerlöschmittel oder Feuerhemmungsmittel ist.

8. Feuerdetektions- und löschsystem (10), umfassend:
mindestens eine Feuerdetektionsvorrichtung (18);
eine Steuereinheit (14);
eine Stromversorgung (16), die mit der Steuereinheit und mindestens einer Feuerdetektionsvorrichtung verbunden ist; und
die Feuerlöschvorrichtung nach einem der vorhergehenden Ansprüche, die mit der Steuereinheit verbunden ist;
wobei die Steuereinheit zum Empfangen von Signalen von der wenigstens einen Feuerdetektionsvorrichtung und zum Senden eines Signals zum Bereitstellen von Strom zum Aktivieren des Betätigungsmechanismus dient.

## Revendications

1. Appareil d'extinction d'incendie (12), comprenant :
un mécanisme d'actionnement (28) définissant une première chambre contenant un dispositif explosif à actionnement électrique (66) ;
un élément piézoélectrique (32) capable de produire une puissance de sortie électrique en réponse à une force mécanique sur l'élément piézoélectrique électriquement connecté au dispositif explosif à actionnement électrique ;
un contenant sous pression (22) avec un matériau logé dans celui-ci ; et
un mécanisme mécanique à actionnement manuel (34) adjacent à l'élément piézoélectrique pour produire la force mécanique sur l'élément piézoélectrique ;
dans lequel une force mécanique produite par le mécanisme mécanique est appliquée sur l'élément piézoélectrique pour produire la puissance de sortie électrique qui actionne le dispositif explosif à actionnement électrique ;
**caractérisé en ce que** l'appareil d'extinction d'incendie comprend en outre un mécanisme de détection thermique (60) raccordé au mécanisme mécanique ;
**en ce que** le mécanisme de détection thermique est configuré pour actionner une portion du mécanisme mécanique à une température d'activation pour fournir la force mécanique sur l'élément piézoélectrique ; et
**en ce que** le contenant sous pression possède une soupape (26) configurée pour être actionnée par le mécanisme d'actionnement.

2. Appareil d'extinction d'incendie selon la revendication 1, dans lequel le mécanisme mécanique comprend un ressort (42 ; 76a, 76b ; 86) et un piston (44 ; 74 ; 84), le piston étant manuellement libérable afin d'être poussé par le ressort en contact avec l'élément piézoélectrique.

3. Appareil d'extinction d'incendie selon la revendication 2, dans lequel le mécanisme mécanique comprend en outre un point de pivotement et un levier (48b), le levier étant agencé pour retenir le piston contre le ressort et étant manuellement actionnable pour osciller autour du point de pivotement pour libérer le ressort.

4. Appareil d'extinction d'incendie selon la revendication 2, dans lequel le mécanisme mécanique comprend en outre un diaphragme (85) et une goupille d'actionnement (88) configurée de telle sorte que l'enlèvement de la goupille fasse en sorte que le ressort pousse le piston à travers le diaphragme en contact avec l'élément piézoélectrique.

5. Appareil d'extinction d'incendie selon la revendication 1, dans lequel le mécanisme mécanique comprend : un logement (92b), un fluide de détection (90a), un diaphragme (95), et un piston (94) configuré de telle sorte qu'une force générée par une température augmentée du fluide de détection à l'intérieur du logement soit appliquée sur une base du piston, qui est maintenu en place par le diaphragme, pour faire en sorte que le piston rompe le diaphragme et entre en contact avec l'élément piézoélectrique.

6. Appareil d'extinction d'incendie selon une quelconque revendication précédente, dans lequel le mécanisme de détection thermique possède une température d'activation entre 80 degrés Celsius et 250 degrés Celsius.

7. Appareil d'extinction d'incendie selon une quelconque revendication précédente, dans lequel le matériau dans le contenant sous pression est un produit extincteur d'incendie ou retardateur d'incendie.

8. Système de détection et de suppression d'incendie (10) comprenant :
au moins un appareil de détection d'incendie (18) ;
une unité de commande (14) ;
une alimentation électrique (16) connectée à l'unité de commande et à l'au moins un appareil de détection d'incendie ; et
l'appareil d'extinction d'incendie selon une quelconque revendication précédente connecté à l'unité de commande ;
dans lequel l'unité de commande est destinée à recevoir des signaux à partir de l'au moins un appareil de détection d'incendie et pour envoyer un signal pour fournir un courant pour activer le mécanisme d'actionnement.
